# EUROPÄISCHE PATENTSCHRIFT

(11) **EP 0 958 322 B1**
(45) Veröffentlichungstag und Bekanntmachung des Hinweises auf die Patenterteilung: **15.01.2003**
(21) Anmeldenummer: 98910590.3
(22) Anmeldetag: 06.02.1998
(51) Int. Cl.: C08K 13/02, C08L 71/02, G02B 6/44

(54) **FÜLLMASSE**
FILLING MATERIAL
MATIERE DE REMPLISSAGE

(30) Priorität: 06.02.1997 DE 19704398
(43) Veröffentlichungstag der Anmeldung: 24.11.1999
(73) Patentinhaber: MWO Gesellschaft zur Herstellung von Chemisch-Technischen Produkten MbH, 19273 Brahlstorf (DE)
(72) Erfinder: MENCKE, Markus, D-21407 Deutsch Evern (DE)
(74) Vertreter: Schupfner, Gerhard D., Dr. Dipl.-Chem.
(86) Internationale Anmeldenummer: DE9800353
(87) Internationale Veröffentlichungsnummer: WO98034983

(56) Entgegenhaltungen:
- EP-A- 0 212 169
- EP-A- 0 732 374
- WO-A-92/00368
- WO-A-97/03117
- DE-A- 3 622 211

## Beschreibung

Die Erfindung betrifft eine Füllmasse insbesondere für Lichtwellenleiterkabel, die Polyoxyalkylene als Basisflüssigkeiten enthält, und die Verwendung solcher Füllmassen in elektrischen und optischen Vorrichtungen.

Lichtwellenleiter werden zur Weiterleitung optischer Signale eingesetzt und zu diesem Zweck in Form von Lichtwellenleiterkabeln verlegt. Lichtwellenleiterkabel weisen im allgemeinen folgenden Aufbau auf ("Loose Tube"-Konstruktion): Eine Kabelummantelung als äußere Begrenzung umfaßt eine oder mehrere Adern. In den Adern befinden sich ein oder mehrere Lichtwellenleiter. Sowohl der Innenraum der Adern als auch der Innenraum der Kabelummantelung ist mit einer Füllmasse gefüllt. Gelartige Füllmassen finden bevorzugt in den Adern Anwendung. Der Zwischenraum zwischen den einzelnen Adern und der Kabelummantelung als äußerer Begrenzung kann ebenfalls mit einer gelartigen Substanz ausgefüllt werden. Aus ökonomischen Gründen ist das Füllmaterial hier meist ein preisgünstigeres Material, z.B. ein Wachs. Die Lichtwellenleiter selbst bestehen meist aus Siliciumdioxid, können aber auch aus Polyolefinen, Fluorkohlenwasserstoffen oder anderen Kunsstoffen bestehen bzw. diese enthalten. Hier seien z.B. Polycycloolefine (insbesondere Co- und Terpolymerisate von Cycloolefinen mit kurzkettigen Olefinen) genannt, die ihrerseits wiederum mit anderen Kunststoffen beschichtet sein können. Daneben existieren auch andere Kabelkonstruktionen wie "Slotted Core"-Kabel, hier liegen die optischen Fasern um einen runden Kern herum in Nuten, wobei die Nuten mit einer gelartigen Substanz gefüllt sind, oder "Ribbon"-Kabel, wo die Fasern auf breiten Bändern ruhen, von denen mehrere ihrerseits zu einem Block verbunden werden.

Heutzutage werden bei Loose-Tube-Konstruktionen die Adern der Kabel üblicherweise mit einer gelartigen Substanz gefüllt, um die Lichtwellenleiter (gleich optische Fasern) vor groben mechanischen oder chemischen Einwirkungen, etwa vor dem Einfluß von Feuchtigkeit zu schützen. Auch bei anderen Kabelkonstruktionen werden gelartige Füllmassen eingesetzt, wie z.B. bei "Slotted Core"-Kabeln oder ("Ribbon"-) Bändchenkabeln. Die Konsistenz der Füllmassen ist so einzustellen, daß im Ruhezustand der/den Faser(n) ein bestimmter Halt gegeben wird. Die gelartige Substanz gibt bei Belastung über einem Schwellenwert nach, um die Lichtwellenleiter vor Querkräften zu schützen (Strukturviskosität mit Fließgrenze). Das Füllmaterial soll dabei stets den gesamten zur Verfügung stehenden Raum in den Adern einnehmen. Gleichzeitig müssen Wechselwirkungen der Füllmasse mit der/den Ader(n), der Kabelummantelung oder dem Lichtwellenleiter bzw. dessen Beschichtung weitestgehend vermieden werden. Weiterhin sollen die Füllmassen gegen Austropfen insbesondere bei hohen Temperaturen ausreichend sicher sein und bei tiefen Temperaturen nicht zu sehr verhärten.

Üblicherweise basiert die gelartige Substanz auf einem mineralischen und/oder synthetischen Öl, das mit einem Thixotropierungsmittel (z.B. kolloidaler Kieselsäure) verdickt ist, ggf. können auch weitere Kohlenwasserstoffpolymere, meist Kautschuke wie SEBS, SIS, SI und SB (S=Styrol, I=Isopren, E=Ethylen, B= Butadien) zur Verminderung des Ausölens und ein Antioxidationsmittel zugefügt sein.

Aus der Patentliteratur sind als Basisflüssigkeit der Füllmassen eine Vielzahl verschiedener Verbindungen bekannt, wie z.B. mineralische / synthetische Öle, Siliconverbindungen, schwach vernetzte Kohlenwasserstofföle, Polyolefine, EP-Kautschuke (E=Ethylen, P=Propylen) und halogenierte Biphenyle.

Die Deutsche Offenlegungsschrift DE-A1-36 22 211 bzw. deren US-Nachanmeldung US 4,839,970 beschreibt eine Füllmasse für Lichtwellenleiteradern und/oder Lichtwellenleiterkabel, die 50 bis 99 Gew.% Polypropylenglykol enthält, dem als Thixotropierungsmittel zwischen 50 und 1 Gew.% hochdisperses Siliciumdioxid, Aluminiumoxid, Aluminiumhydroxid und/oder eine halogenhaltige organische Verbindung zugesetzt sind. Das Polypropylenglykol hat bevorzugt ein Molekulargewicht von 2000 bis 3500 g/mol. Wird die Füllmasse in den Lichtwellenleiteradern verwendet, so ist das Polypropylenglykol zu 99 bis 96 Gew.% und das Thixotropierungsmittel zu 1 bis 4 Gew.% in der Füllmassse enthalten. Als Füllmasse für die Lichtwellenleiterkabel wird eine Zusammensetzung von 92 bis 50 Gew.% Polypropylenglykol und 8 bis 50 Gew.% Thixotropierungsmittel empfohlen. Diese Füllmasse greift Polyurethanacrylate als Fasercoating-Material nicht an.

Das Material, aus dem die Adern bei der Fertigung extrudiert werden, besteht meist aus Polyester, Polybutylenterephtalat oder einem vergleichbaren Kunststoff, der zumindest teilweise aus polaren Gruppen besteht. Da diese Art Kunststoff verhältnismäßig teuer ist, empfiehlt sich aus wirtschaftlichen Gesichtspunkten ein Umstieg auf preiswertere olefinische Polymere, wie LD-Polyethylen, HD-Polyethylen oder Polypropylen. Jedoch basieren nahezu alle auf dem Markt befindlichen Füllmassen auf einem mineralischen und/oder synthetischen Öl, das die mechanischen Eigenschaften der mit ihm in Berührung kommenden olefinischen Kunststoffe verschlechtert, da es in diese migriert und so deren Eigenschaften verändert. So verringert sich z.B. durch die Öl-Migration die Zugfestigkeit entscheidend. Um die preiswerteren olefinischen Werkstoffe als Adermaterialien einsetzen zu können, benötigt man neue migrationsfreie Aderfüllmassen.

Es ist die Aufgabe der Erfindung, eine solche Füllmasse für Lichtwellenleiterkabel bereitzustellen, die für Adermaterialien und/oder Kabelummantelungen und/oder Kabelbeschichtungen aus olefinischen Polymeren eine geeignet geringe Migration aufweist und gleichzeitig unpolar genug ist, um als Feuchtigkeitssperre zu wirken.

Weiterhin muß die Füllmasse chemisch und physikalisch alterungsbeständig sein und über einen weiten Temperaturbereich ( - 60°C bis + 80°C) ihre Eigenschaften sowohl in Hinsicht ihres rheologischen Verhaltens als auch in Hinsicht auf ihre chemische Kompatibilität mit den anderen Werkstoffen des Lichtwellenleiterkabels weitestgehend beibehalten. Sie soll effektiv Zug- und Druckkräfte aufnehmen und von den Lichtwellenleitern fernhalten sowie von Hause aus keine Neigung zur Wasseraufnahme besitzen. Auch muß sie beim Befüllen der Kabel und Adern gut zu verarbeiten sein und darf auch nach langer Benutzung bzw. unter Einfluß von erhöhter oder erniedrigter Temperatur nicht zur Trennung der Phasen, Basisflüssigkeit und kolloidale Partikel, führen. Außerdem müssen Wasserstoff und Wasser wirksam von dem Lichtwellenleiter ferngehalten werden.

Eine Füllmasse für Lichtwellenleiterkabel, die die vorstehenden Aufgaben erfüllt, ist gemäß Anspruch 1 Gegenstand der Erfindung. Sie besteht aus einer Zusammensetzung, die als Basisflüssigkeit ein oder mehrere Polyoxyalkylene enthält, deren Alkyleneinheiten jeweils 2 bis 5, vorzugsweise 2 bis 3 Kohlenstoffatome aufweisen und die bezogen auf die Alkyleneinheit jeweils 2 bis 4, vorzugsweise 2 bis 3, Etherbindungen aufweisen und als kolloidale Partikel Oxide und/oder Hydroxide des Siliciums und/oder Aluminiums sowie zumindest ein Tensid enthält.

Inbesondere haben die in den erfindungsgemäßen Füllmassen enthaltenen Polyoxyalkylene die allgemeine Strukturformel :

A-[O-X]ₙ-Z ,

wobei
- A und Z: Endgruppen sind, die üblicherweise Wasserstoff-, Hydroxy- oder C1- bis C5- Alkylgruppen sind, wobei A bevorzugt eine Alkylgruppe und Z eine Hydroxygruppe ist;
- X: im wesentlichen eine unverzweigte oder verzweigte gesättigte Alkylengruppe mit 2 bis 4 Kohlenstoffatomen, bevorzugt 2 oder 3, ist, wie z.B. Ethyliden -CH₂-CH₂- oder 1,2-Propyliden -CH₂-CH(CH₃)- oder 1,3-Butyliden -CH₂-CH₂(CH₃)-CH₂- , wobei X für jedes n unterschiedlich sein kann, und
- n: eine solche ganze Zahl ist, so daß das mittlere Molekulargewicht der Polymeren 200 bis 5000 g/mol beträgt.

Die erfindungsgemäßen Polyoxyalkylene weisen ein Molekulargewicht von 200 bis 5000 g/mol, bevorzugt 200 bis 2000 g/mol und besonders bevorzugt von 300 bis 1800 g/mol auf. Polyoxyalkylene werden auch als Polyether bezeichnet. Zu der Klasse der Polyoxyalkylene gehören auch Polypropylenglykol und Polyethylenglykol. Die Polyoxyalkylene sollten einen Wassergehalt von < 0,2 Gew.% (nach Karl Fischer) aufweisen. Beispielhaft seien die Produkte PE 8901 der Goldschmidt AG und Acclaim 2200 der Arco Chemical genannt.

Als kolloidale Partikel (Thixotropierungsmittel) wird hochdisperse Kieselsäure, die ggf. Zusätze von Al₂O₃ enthalten kann, verwendet, wobei die Kieselsäure ggf. teilweise oder ganz hydrophobiert (gecoated) sein kann. Die BET-Oberfläche der kolloiden Partikel kann von 50 - 500 m²/g betragen. Die mittlere Teilchengröße der kolloiden Partikel sollte kleiner 50 nm, bezogen auf die mittlere Größe der Primärteilchen bzw. kleiner 50 µm, bezogen auf die mittlere Größe der Agglomerate, sein. Beispielhaft seien die Handelsprodukte Aerosil® R 202 (Degussa AG) und CaB-O-Sil® TS 610 (Cabot GmbH) genannt. Weiterhin sind als kolloidale Partikel Silikate, Bentonite, Montmorillonit oder Mischungen geeignet.

Zusätzlich werden Tenside verwendet, die als Additive die rheologische Wirkung der kolloidalen Partikel vorteilhaft verändern und diese gleichzeitig im "dispergierten" Zustand halten.

Die Tenside im Sinne der Erfindung sind grenzflächenaktive Stoffe. Sie verfügen über einen hydrophoben Kohlenwasserstoff-Rest und über eine, ggf. auch mehrere hydrophile funktionale Gruppen. Bei den hydrophilen Anteilen des Moleküls handelt es sich um polare funktionale Gruppen (z.B. ―COO―,―CONH―, ―OSO₃―, ―SO₃―), während die hydrophoben Teile unpolare Kohlenwasserstoff-Reste darstellen.

Gegenstand der erfindungsgemäß eingesetzten grenzflächenaktiven Stoffe (Tenside) sind :
(A) anionische und kationische Tenside.
   Aniontenside (anionische Tenside) weisen eine oder mehrere funktionelle anionenaktive Gruppen auf, die in wässriger Lösung unter Bildung von Anionen dissoziieren. Beispiele für typische anionische Gruppen sind ―COOH, ―COONa, ―SO₃Na und ―OSO₃Na.
   Besonders geeignet sind Polyhydroxycarbonsäuren, insbesondere oligomere oder polymere Polyhydroxycarbonsäuren und deren Salze.
   Kationtensid ist eine Sammelbezeichnung für kationenaktive Tenside, also grenzflächenaktive Stoffe, die die Oberflächenaktivität bedingende hochmolekulare oder oligomere hydrophobe organische Reste aufweisen und bei der Dissoziation in wässriger Lösung als Kationen vorliegen. Kationtenside sind z.B. die quartären Ammonium-Verbindungen der allgemeinen Formel: (R₄N+)X-. Genannt seien Kationtenside, bei denen die Stickstoff-Gruppe mit zwei langen und zwei kurzen Alkyl-Resten substituiert ist, z.B. Dimethyldistearylammoniumchlorid.
   Bevorzugt sind Alkylammoniumsalze, insbesondere oligomere oder polymere, wie z.B. Alkylammoniumsalze polymerer Carbonsäuren oder deren Derivate. Die Menge des Tensids beträgt vorzugsweise 10 bis 50% des Anteils der kolloiden Partikel (bezogen auf das Gewicht). Die Zugabe des Tensides ermöglicht vorteilhaft die Verwendung geringer Anteile an kolloidalen Partikeln und ebenso die Verwendung niedrigmolekularer Polyoxyalkylene. Dies führt zu ausgezeichnetem Tieftemperaturverhalten der erfindungsgemäßen Füllmassen. Zudem reduziert sich das Ausölverhalten des Füllmassen durch die Zugabe des Tensides.
   Beispielhaft seien geeignete Tenside genannt, die auch als Feststoffe eingesetzt werden können: Lösung eines niedermolekularen ungesättigten sauren Polycarbonsäurepolyesters Tracodis 200; Lösung eines Polyhydroxycarbonsäureamides Tracodis 405.
   Gegenstand der erfindungsgemäß eingesetzten grenzflächenaktiven Stoffe (Tenside) sind weiterhin:
(B) Polyole, die mindestens 3 Hydroxygruppen (einschließlich der veretherten und veresterten Hydroxygruppen), vorzugsweise mindestens 4 und besonders bevorzugt 5 bis 30 Hydroxygruppen aufweisen, wobei die Hydroxygruppen teilweise oder insgesamt, vorzugsweise teilweise, verethert oder verestert sind, so daß das Polyol neben ggf. vorhandenen nicht veretherten oder veresterten (freien) Hydroxygruppen zumindest eine Ethergruppe (C-O-C Gruppe) und/oder zumindest eine Estergruppe (C-O-C(=O)-C Gruppe) pro Molekül aufweist. Weiterhin ist es bevorzugt, daß die Polyol-Verbindung mindestens zwei freie Hydroxygruppen (-OH) aufweist.

Exemplarisch seien die Polyole nach (B) erläutert durch folgende Verbindungen / Verbindungsklassen, wobei Gegenstand der Erfindung nur solche Verbindungen sind, die auch unter die Definition nach (B) fallen:
- oxalkylierte Polyhydroxyalkohole,
- oxalkylierte Polycarbonsäuren und
- Derivate von Polyhydroxycarbonsäuren wie oxalkylierte Hydroxycarbonsäuren, und oxalkylierte Carbonsäureester.

Besonders bevorzugt sind:
- Ester einer Mono- oder Di-Carbonsäure mit einem Polyalkohol, wobei die Säuregruppe des Esters vorzugsweise aus langkettigen Carbonsäuren mit mindestens 6, besonders bevorzugt mindestens 12, Kohlenstoffatomen besteht und die Ester-Verbindung besonders bevorzugt oxalkyliert - z.B. oxethyliert - ist. Dies sind z.B. Sorbitanester und oxalkylierte Derivate eines Sorbitanesters (insbesondere die Tween®- und Span® Handelsprodukte) und Succroate (Fettsäureester der Saccharose) und deren polyoxalkylierte Derivate.
- Alkyl- / Alkenylglykoside abgeleitet aus Fettalkoholen und aus (ringförmigen, beliebigen) Zuckermolekülen mit insbesondere Glukose- und/ oder Maltose-Einheiten, die ggf. glykosidisch gebunden, und ein mittleres Molekulargewicht von 250 bis 1000 g/mol aufweisen. Der Fettalkohol weist vorzugsweise 6 bis 22 Kohlenstoffatome auf. Die Alkyl- / Alkenylglykoside können oligomer sein, wobei der Glykosid-Anteil im Mittel aus ein bis drei, vorzugsweise ein bis zwei Glykosid-Einheiten besteht. Die Alkenylglykoside können ein oder zwei Doppelbindungen aufweisen. Alkylglycoside sind z.B. die Handelsprodukte Plantacare® der Henkel KGaA.

Unter oxalkylierten Verbindungen werden im Sinne der Erfindung Verbindungen verstanden, wie sie durch Umsetzung von acidem Wasserstoff enthaltenden Verbindungen wie Carbonsäuren oder Alkoholen mit C2- bis C4- Oxiranen erhältlich sind. Wird Ethylenoxid eingesetzt, spricht man von Ethoxylierung oder Oxethylierung.

Mikrosphären als fakultative Komponente der Füllmasse dienen zum Verändern der Dichte und der relativen Dielektrizitätskonstante der Füllmassen. Sie sind thermoplastische Hohlkügelchen, gefüllt mit Treibgasen. Ein Handelsprodukt ist Expancel ® DE 551 der Firma Expancel / AKZO . Als Antioxidationsmittel dienen z.B. sterisch gehinderte Hydrochinone oder Phenole. Handelsprodukte sind z.B. Irganox ® 1010 (Pentaerythriyl-tetrakis[3-(3,5-di.-tert.butyl-4-hydroxyphenyl) propionat]), Irganox 1076 (Benzolpropionsäure-3,5-bis(1,1-dimethylethyl)-4-hydroxy-octadecylester) oder Naftonox® BHT.

Eine weitere fakultative Komponente der Füllmasse sind Mineralöle und/oder synthetische Kohlenwasserstofföle. Die synthetischen Öle sind z.B. Polyalkene, deren Monomereinheiten aus 5 bis 14 Kohlenstoffatomen bestehen, wobei diese vorzugsweise Alk-1-ene sind. Diese Verbindungen werden auch als PAO's bezeichnet. Diese weisen vorzugsweise eine kinematische Viskosität von 2 bis 14 mm²/s (bei 100°C, gemessen nach ASTM D445) auf.

Mögliche erfindungsgemäße Zusammensetzungen der Füllmasse ergeben sich aus Tabelle 1. Die Gewichtsprozent (Gew.%)-Angaben sind jeweils unabhängig voneinander.

**Tabelle 1**

| **Erfindungsgemäße Zusammensetzungen der Füllmassen** | | |
|---|---|---|
| Anteile [Gew.%] | bevorzugt * [Gew.%] | Komponenten |
| *50 -* 99 | 99 - 75 | Polyoxyalkylen |
| 1 - 10 | 2 - 6 | kolloidale Partikel |
| 0,1 - 10 | 0,2 - 5 | Tensid |
| 0 - 5 | 0,5 - 2,5 | Mikrosphären (Hohlkügelchen) |
| 0 - 5 | 0,2 - 2,5 | Antioxidationsmittel |

Die Herstellung der erfindungsgemäßen Füllmassen kann nach folgendem Schema durchgeführt werden:
1. Vorlegen der flüssigen Komponente (Polyoxyalkylene),
2. Ggf. Zugabe und Lösen des Antioxidationsmittels,
3. Zugabe und vorsichtiges Einrühren der kolloidalen Partikel in die flüssige Komponente(n),
4. Dispergieren der kolloidalen Partikel mit einem Mischer,
5. Wenn Mikrosphären zugegeben werden, einrühren derselben,
6. Zugeben und verteilen des Tensids, wobei damit die geforderte Viskosität eingestellt wird,
7. Entfernen von Luftblasen durch Anlegen von Vakuum.

Der Füllmasse können Farbstoffe zugesetzt sein. Die Migrationsresistenz wird bei den jeweiligen Füllmassen zum größten Teil durch die Wahl der Basisflüssigkeit festgelegt, sie ist zusätzlich abhängig von der Temperatur und der Zeit.

Gegenstand der Erfindung sind auch elektrische oder optische Vorrichtungen mit einer Hülle/einem Gehäuse wie Kabel, Adern, Leisten, Stecker oder Muffen, enthaltend mindestens einen Lichtwellenleiter, der sich im Inneren der Vorrichtung befindet, wobei das Gehäuse/die Hülle bzw. dessen/deren Oberfläche, im wesentlichen aus Kohlenwasserstoffpolymeren besteht und die Hülle/das Gehäuse im Inneren mit einer erfindungsgemäßen Füllmasse gefüllt ist.

Verwendung finden die erfindungsgemäßen Füllmassen in elektrischen oder optischen Vorrichtungen mit einer Hülle/einem Gehäuse wie Kabeln, Adern, Leisten, Steckern oder Muffen, wobei die Vorrichtungen mindestens einen Lichtwellenleiter enthalten. Vorteilhaft werden sie dort eingesetzt, wo die Oberfläche zumindest einer der Vorrichtungen, mit denen die Füllmasse in Kontakt kommt, im wesentlichen aus Kohlenwasserstoffpolymeren besteht. Kohlenwasserstoffpolymere in Sinne der Erfindung sind Polymere, die zu mehr als 95 Atom%, bevorzugt zu größer 98 Atom%, ausschließlich aus Wasserstoff- und/oder Kohlenstoffatomen bestehen. Typische Vertreter dieser Klasse sind die Poly-α-Olefine.

### Experimenteller Teil

Bei der Herstellung der Beispielrezepturen 1 bis 3 nach obigem Schema kamen folgende Polyoxyalkylene zum Einsatz.

**Tabelle 2**

| **Polyoxyalkylene** | | | | |
|---|---|---|---|---|
| | | Typ | [g/mol] | Hersteller |
| POA 1 | Polyoxypropylen | BP18100 | 1500 - 2000 | Firma Goldschmidt AG |
| POA 2 | Polyoxypropylen | PE 8901 | 300 - 500 | Firma Goldschmidt AG |

Die Füllmassen 1 bis 3 enthielten im einzelnen folgende Komponenten, wobei die Zahlenwerte Gew.% sind:

**Tabelle 3**

| **Rezepturen** | | | | |
|---|---|---|---|---|
| | | Beispiel 1 | Beispiel 2 | Beispiel 3 |
| POA 1 | | | 93,4 | 93,9 |
| POA 2 | | 94,4 | - | - |
| Aerosil R 202 | (Kieselsäure) | - | 3 | - |
| Cab-O-Sil M 5 | (Kieselsäure) | 5 | 3 | 5 |
| Tracodis 200 | (Tensid) | 0,5 | 0,5 | - |
| Expancel DE 551 | (Mikrosphären) | - | - | 1 |
| Naftonox BHT | (Antioxidationsmittel) | 0,1 | 0,1 | 0,1 |

Im folgenden soll allgemein auf wichtige Größen der erfindungsgemäßen Lichtwellenleiterkabel - Füllmassen eingegangen werden, die für die Eigenschaften der Füllmassen über das genannte Beispiel hinaus von Bedeutung sind. Ergänzt werden die allgemeinen Feststellungen durch konkrete Meßwerte der Beispielrezepturen.

### Rheologie

Die erfindungsgemäßen Füllmassen zeigen Strukturviskosität mit einer Fließgrenze. Die erforderliche Viskosität ist mit Hilfe der Kieselsäure und des Tensides nahezu beliebig einstellbar. Ein elastischer Anteil ist praktisch nicht feststellbar. Das Viskositätsverhalten wurde mit einem Rheometer Physica MC 100 und einem Meßsystem nach DIN 53019 bestimmt.

### Härte

Maß hierfür ist die Konuspenetration nach DIN ISO 2137. Hiermit wird üblicherweise das Verhalten der Masse bei tiefen Temperaturen beschrieben (Eindringtiefe eines Konus in die Masse).

**Tabelle 4**

| **Konuspenetration bei verschiedenen Temperaturen anhand Beispiel 1** | |
|---|---|
| Temperatur in °C | Konuspenetration in mm/10 |
| - 40 | 250 |
| - 25 | 270 |
| 0 | 300 |
| + 25 | 320 |

### Ausölverhalten (Methode: FTM 791 C)

Hierfür wird üblicherweise ein Siebtest durchgeführt, bei dem eine bestimmte Menge der Masse in ein Kegelsieb (60 mesh) gefüllt wird. Das Kegelsieb wurde in einem Becherglas über 24h bei einer bestimmten Temperatur konditioniert. Dann wurde die aus dem Sieb in das Becherglas getropfte Menge zu der eingewogenen Menge in das Verhältnis gesetzt. Nach der in Deutschland vorgesehenen Spezifikation dürfen die Massen bei 60°C über 24 h maximal 9 % ausölen.

**Tabelle 5**

| **Ausölverhalten der Rezepturen** | |
|---|---|
| Masse | Ausölung 24h / 60°C |
| Beispiel 1 | 0 % |
| Beispiel 2 | 1 % |
| Beispiel 3 | 0 % |
| Beispiel 1 (ohne Tensid) | 6 % |

### Migration

Es gibt keine allgemein genormte Meßmethode zur Bestimmung der Migration. Folgende Methode wurde hier angewandt:
- Aus extrudierten HDPE- oder PP-Platten (oder sonstiges zu bestimmendes Material) wurden kleine Knochen gestanzt ( L 50mm, B 10 mm, D 1 mm )
- Ein Knochen wurde für eine bestimmte Zeit bei einer bestimmten Temperatur in der Füllmasse oder in dem Grundöl konditioniert über 7 Tage bei 60°C oder 70°C oder 85°C.
- Danach wurde die Masse des Knochens mit der Masse vor der Konditionierung verglichen und daraus die Masseaufnahme an Öl berechnet.

**Tabelle 6**

| **Migration bestimmt über 7 Tage bei 60 °C** | | |
|---|---|---|
| Grundöl | Migartion in HDPE | PP |
| POA 1 | < 0,1% | <0,1% |
| POA 2 | 0,5% | 2% |
| PAO 6 | 1.2% | 4% |
| PAO 10 | 1,0% | 3% |
| Mineralöl | 2,0 % | 4,5% |

Um die bestimmten Werte vergleichen zu können, müssen immer die Temperatur und die Zeit angegeben werden. Werte unterschiedlicher Materialien kann man nur bei identischen Testbedingungen vergleichen (wie gleiche Zeitspanne, gleiche Temperatur). Zum Vergleich werden hier ein paar Werte der Grundöle herkömmlicher Massen im Vergleich zur Erfindung aufgelistet. Bei der Migration wird abhängig von der Temperatur nach einer bestimmten Zeit eine Sättigung erreicht. Die Migrationswerte sind bis auf geringe Abweichungen unabhängig davon, ob sie in dem Grundöl oder der daraus hergestellten Füllmasse bestimmt werden, bzw. sie korrelieren direkt.

### Flammpunkt (Methode: DIN ISO 2592)

Für die Sicherheitsaspekte bei der Herstellung und der Verarbeitung ist auch der Flammpunkt der Massen von Bedeutung, da sowohl bei der Produktion als auch beim Einfüllen in das Kabel kurzzeitig verhältnismäßig hohe Temperaturen entstehen können. Bei den verwendeten Polyoxyalkylenen liegen die Flammpunkte höher als 220°C.

Die vorteilhaften Eigenschaften der erfindungsgemäßen Füllmassen lassen sich anhand der in Tabelle 7 aufgeführten Meßwerte aufzeigen. Die verwendeten Einsatzstoffe sind:

| | |
|---|---|
| POA | Polyoxypropylen PE 8901 |
| Kieselsäure | TS 610 (Cabot) |
| Tensid | Tracodis 200 |
| Antioxidationsmittel | Naftonox BHT |

Die dynamische Viskosität ist mit einem Rheometer Physica MC100 und einem Meßsystem nach DIN 53109 bestimmt worden.

**Tabelle 7**

| **Weitere Rezepturen** | | | | | | |
|---|---|---|---|---|---|---|
| **Rezeptur** | **1** | **2** | **3** | **4** | **5** | **6** |
| **POA** [Gew%] | 94,4 | 94,4 | 92,4 | 94,4 | 94,4 | 93,3 |
| **kolloidale Partikel** [Gew%] | 5,0 | 5,0 | 7,0 | 5,0 | 5,0 | 6,0 |
| **Tensid** [Gew%] | 0,5 | 0,5 | 0,5 | - | - | 0,6 |
| **Antioxidationsmittel** [Gew%] | 0,1 | 0,1 | 0,1 | 0,1 | 0,1 | 0,1 |
| **mittl. Molmasse** des Basisöls [g/mol] | 1700 | 300 | 8000 | 1700 | 300 | 1700 |
| **dyn.Viskosität** des Basisöls bei 25°C [mPas] | 200 | 20 | 4000 | 200 | 20 | 200 |
| **Konuspenetration** | | | | | | |
| +25°C [mm/10] | 320 | 340 | 300 | 360 | 380 | 310 |
| -40°C [rnm/10] | 250 | 280 | 140 | 270 | 290 | 230 |
| **Ausölung** [%] 60°C/24h | 0,0 | 0,0 | 1,0 | 3,5 | 4,5 | 0,0 |
| **Migration** [%] 7d/70°C | <0,1 | <0,1 | <0,1 | <0,1 | 0,1 | <0,1 |

## Patentansprüche

1. Füllmasse enthaltend, jeweils bezogen auf das Gesamtgewicht der Füllmasse,
(a) 50 bis 99 Gew.% eines oder mehrerer Polyoxyalkylene, deren Alkyleneinheiten jeweils 2 bis 5 Kohlenstoffatome und jeweils 2 bis 4 Etherbindungen aufweisen, wobei die Polyoxyalkylene ein Molekulargewicht von 200 bis 5000 g/mol haben,
(b) 1 bis 10 Gew.% eines oder mehrerer kolloidaler Oxide und/oder Hydroxide des Siliciums und/oder des Aluminiums und
(c) 0,1 bis 10 Gew.% eines oder mehrerer Tenside, wobei das Tensid
(A) ein anionisches oder kationisches Tensid ist und/oder
(B) ein Polyol ist, das mindestens 3 Hydroxygruppen aufweist, wobei zumindest eine dieser Hydroxygruppen verethert und/oder verestert ist.

2. Füllmasse gemäß Anspruch 1, **dadurch gekennzeichnet, daß** (a) zu 75 bis 99 Gew.%, besonders bevorzugt zu 85 bis 99 Gew.%, in der Füllmasse enthalten ist.

3. Füllmasse gemäß einem der vorhergehenden Ansprüche, **dadurch gekennzeichnet, daß** (b) zu 2 bis 6 Gew.% in der Füllmasse enthalten ist.

4. Füllmasse gemäß einem der vorhergehenden Ansprüche, **dadurch gekennzeichnet, daß** (c) zu 0,2 bis 5 Gew.% in der Füllmasse enthalten ist.

5. Füllmasse gemäß einem der vorhergehenden Ansprüche, **dadurch gekennzeichnet, daß** (a) ein mittleres Molekulargewicht von 200 bis 2000 aufweist.

6. Füllmasse gemäß einem der vorhergehenden Ansprüche, **dadurch gekennzeichnet, daß** (a) Polyoxypropylen und/oder Polyoxyethylen ist.

7. Füllmasse gemäß einem der vorhergehenden Ansprüche zusätzlich enthaltend ein Antioxidationsmittel.

8. Füllmasse gemäß einem der vorhergehenden Ansprüche zusätzlich enthaltend Microsphären.

9. Füllmasse gemäß einem der vorhergehenden Ansprüche, **dadurch gekennzeichnet, daß** das Tensid gemäß (c)(A) ein Alkylammoniumsalz ist.

10. Füllmasse gemäß einem der vorhergehenden Ansprüche, **dadurch gekennzeichnet, daß** das Tensid gemäß (c)(B) ein ethoxylierter Polyolester ist.

11. Elektrische oder optische Vorrichtung mit einer Hülle/einem Gehäuse wie Kabel, Adern, Leisten, Stecker oder Muffen, enthaltend mindestens einen Lichtwellenleiter, der sich im Inneren der Vorrichtung befindet, wobei die Hülle/das Gehäuse im Inneren mit einer Füllmasse gemäß einem der Ansprüche 1 bis 10 gefüllt ist.

12. Elektrische oder optische Vorrichtung gemäß Anspruch 11, wobei das Gehäuse/die Hülle bzw. dessen/deren Oberfläche, im wesentlichen aus Kohlenwasserstoffpolymeren besteht.

13. Verwendung der Füllmassen gemäß einem der Ansprüche 1 bis 10 in elektrischen oder optischen Vorrichtungen mit einer Hülle/einem Gehäuse wie Kabeln, Adern, Leisten, Steckern oder Muffen, die mindestens einen Lichtwellenleiter enthalten.

14. Verwendung der Füllmassen gemäß Anspruch 13, **dadurch gekennzeichnet, daß** die Oberfläche zumindest einer der Vorrichtungen, mit denen die Füllmasse in Kontakt kommt, im wesentlichen aus Kohlenwasserstoffpolymeren besteht.

## Claims

1. A filler compound, containing, relative to the total weight of the filler compound,
(a) 50 to 99 %w/w of one or more polyoxy alkylenes, whose alkyl units each have 2 to 5 carbon atoms, and 2 to 4 ether bonds, wherein the polyoxy alkylenes have a molecular weight of 200 to 5000 g/mol,
(b) 1 to 10 %w/w of one or more colloidal oxides and/or hydroxides of the silicon and/or aluminum, and
(c) 0.1 to 10 %w/w of one or more surfactants, wherein the surfactant
(A) is an anionic or cationic surfactant, and/or
(B) is a polyol having at least 3 hydroxy groups, wherein at least one of these hydroxy groups is etherified and/or esterified.

2. The filler compound according to claim 1, **characterized in that** the filler compound contains 75 to 99 %w/w, especially preferred 85 to 99 %w/w of (a).

3. The filler compound according to one of the preceding claims, **characterized in that** the filler compound contains 2 to 6 %w/w of (b).

4. The filler compound according to one of the preceding claims, **characterized in that** the filler compound contains 0.2 to 5%w/w of (c).

5. The filler compound according to one of the preceding claims, **characterized in that** (a) has a molecular weight of 200 to 2000.

6. The filler compound according to one of the preceding claims, **characterized in that** (a) is polyoxy propylene and/or polyoxy ethylene.

7. The filler compound according to one of the preceding claims, additionally containing an antioxidant.

8. The filler compound according to one of the preceding claims, additionally containing microspheres.

9. The filler compound according to one of the preceding claims, **characterized in that** the surfactant according to (c) (A) is an alkyl ammonium salt.

10. The filler compound according to one of the preceding claims, **characterized in that** the surfactant according to (c)(B) is an ethoxylated polyolester.

11. An electrical or optical device with a jacket/a housing, e.g., cables, wires, ledges, plugs or sleeves, containing at least one optical waveguide, which is located inside the device, wherein the jacket/the housing is filled inside with a filler compound according to one of claims 1 to 10.

12. The electrical or optical device according to claim 11, wherein the housing/the jacket or its surface essentially consists of hydrocarbon polymers.

13. A use of the filler compounds according to one of claims 1 to 10 in electrical or optical devices with a jacket/a housing, e.g., cables, wires, ledges, plugs or sleeves, which contain at least one optical waveguide.

14. The use of the filler compounds according to claim 13, **characterized in that** the surface of at least one of the devices with which the filler compound comes into contact essentially consists of hydrocarbon polymers.

## Revendications

1. Masse de remplissage contenant, par rapport au poids total de la masse de remplissage,
(a) 50 à 99 % d'un ou de plusieurs polyoxyalkylènes, dont les unités d'alkylène présentent respectivement 2 à 5 atomes de carbone et respectivement 2 à 4 liaisons d'éther, les polyoxyalkylènes ayant un poids moléculaire de 200 à 5.000 g/mole,
(b) 1 à 10 % de poids d'un ou de plusieurs oxydes colloïdaux et/ou hydroxydes du silicium et/ou de l'aluminium et
(c) 0,1 à 10 % de poids d'un ou de plusieurs tensioactifs, le tensioactif
(A) étant un tensioactif anionique ou cationique et/ou
(B) étant un polyol, qui présente au moins 3 hydroxydes, moyennant quoi au moins un de ces hydroxydes est éthérifié et/ou estérifié.

2. Masse de remplissage selon la revendication 1, **caractérisée en ce que** (a) est contenu pour 75 à 99 % de poids, avec une préférence particulière pour 85 à 99 % de poids, dans la masse de remplissage.

3. Masse de remplissage selon l'une quelconque des revendications précédentes, **caractérisée en ce que** (b) est inclus pour 2 à 6 % de poids dans la masse de remplissage.

4. Masse de remplissage selon l'une quelconque des revendications précédentes, **caractérisée en ce que** (c) est inclus pour 0,2 à 5 % de poids dans la masse de remplissage.

5. Masse de remplissage selon l'une quelconque des revendications précédentes, **caractérisée en ce que** (a) présente un poids moléculaire moyen de 200 à 2.000.

6. Masse de remplissage selon l'une quelconque des revendications précédentes, **caractérisée en ce que** (a) est du polyoxypropylène et/ou du polyoxyéthylène.

7. Masse de remplissage selon l'une quelconque des revendications précédentes contenant en supplément un antioxydant.

8. Masse de remplissage selon l'une quelconque des revendications précédentes contenant en supplément des microsphères.

9. Masse de remplissage selon l'une quelconque des revendications précédentes, **caractérisée en ce que** le tensioactif selon (c) (A) est un sel d'ammonium d'alkyle.

10. Masse de remplissage selon l'une quelconque des revendications précédentes, **caractérisée en ce que** le tensioactif selon (c)(B) est un polyolester éthoxylé.

11. Dispositif électrique ou optique avec une enveloppe / un boîtier tel que des câbles, des brins, des baguettes, des fiches, ou des manchons, contenant au moins un guide d'ondes optiques, qui se trouve à l'intérieur du dispositif, l'enveloppe (le boîtier) étant rempli à l'intérieur d'une masse de remplissage selon l'une quelconque des revendications 1 à 10.

12. Dispositif électrique ou optique selon la revendication 11, le boîtier/ l'enveloppe ou la surface de celui-ci/ celle-ci étant essentiellement à base de polymères d'hydrocarbure.

13. Utilisation des masses de remplissage selon l'une quelconque des revendications 1 à 10 dans des dispositifs électriques ou optiques avec une enveloppe/ un boîtier tel que des câbles, des brins, des baguettes, des fiches ou des manchons, qui contiennent au moins un guide d'ondes optiques.

14. Utilisation des masses de remplissage selon la revendication 13, **caractérisée en ce que** la surface d'au moins l'un des dispositifs, avec lesquels la masse de remplissage vient par contact, est essentiellement à base de polymères d'hydrocarbure.
